# EUROPEAN PATENT APPLICATION

(11) **EP 4 230 045 A1**
(43) Date of publication of application: **23.08.2023**
(21) Application number: 23464002.7
(22) Date of filing: 30.01.2023
(51) Int. Cl.: A21D 13/045, A21D 13/066, A21D 13/45, A21D 2/36, A21B 5/02, A21D 8/06, A21D 10/04, A21D 13/047

(54) **AGLUTENIC AND FUNCTIONAL WAFERS AND PROCESS FOR OBTAINING THEM**

(30) Priority: 18.02.2022 RO 202200084
(71) Applicant: Stefan cel Mare University of Suceava, 720229 Suceava, County Suceava (RO)
(72) Inventor: Dabija, Adriana, Loc. Bulai (Com. Moara), Judetul Suceava (RO); Chetrariu, Ancuta, Suceava, Judetul Suceava (RO)

(57) **Abstract**

The invention refers to an assortment of gluten-free and functional wafers with an improved nutritional value, with a high protein and fiber content, intended for all categories of consumers. The gluten-free and functional wafers, according to the invention, are obtained from the following ingredients: chickpea flour, wild garlic, spent grain flour, golden flaxseeds, hemp seeds, sodium bicarbonate, salt, and water to create a fluid dough with a moisture of 65-70%. The production of gluten-free and functional wafers, according to the invention, includes the following stages: qualitative and quantitative reception of raw and auxiliary materials, dosing and preparation of raw and auxiliary materials, mixing the components to obtain the fluid dough, filtering the dough to separate possible agglomerations, pouring into molds, baking in an electric oven at a temperature of 290°C, for 3-4 minutes up to a moisture of 2-3%, cooling and packaging of the final product.

## Description

The invention refers to an aglutenic and functional flour product from the category of wafers, its composition including chickpea flour, wild garlic, spent grain flour, golden flaxseed and hemp seeds, and a process of obtaining them.

This category of flour products includes a wide range of assortments that are made by baking a fluid dough made of wheat flour, water, salt, leavening agent, and other flavor- and aroma-enhancing ingredients in special forms that are then presented as sheets or in various alveoli formats with high porosity but no filling (Zaharia, T., 1983; Banu et al., 2006). The drawbacks stem from the possibility that some of these goods may be low in nutritious content and lack clearly defined sensory qualities.

According to the invention, the method eliminates these drawbacks and increases the variety of wafer goods because they are made from chickpea flour and spent grain flour and are aimed at those who wish to eat healthily.

The technological issue that the invention resolves is the need for a product with better nutritional value, high protein, and fiber content that can be ingested by customers of various demographics, including those who are gluten intolerant.

According to the invention, the product includes receiving both qualitative and quantitative amounts of the raw and auxiliary materials, dosing and preparing the raw and auxiliary materials, mixing the components to create fluid dough, filtering the batter to remove any potential agglomerations, pouring the batter into molds, baking in an electric oven, cooling the finished product, and packaging it.

The following benefits are attained with implementation of the invention:
- acquiring flour items that gluten-intolerant persons can also consume because chickpea flour is an aglutenic basic ingredient;
- generating a variety of wafers with functional food roles as a result of the manufacturing recipe's elements. Chickpea flour is a fantastic source of protein, low-glycemic-index carbohydrates, dietary fiber, minerals including potassium, phosphorus, calcium, manganese, copper, iron, and zinc, vitamins of the B complex, provitamin A, vitamins C, E, and K, and vitamins of the B complex (Dabija, A., 2020). Allyl sulfide, vitamin A, vitamin C, carotenoids, ethereal oil, volatile oils, allicin, adenosine, and minerals are present in wild garlic (Banu et al., 2010). The protein, dietary fiber, and minerals included in spent grain flour (Chetrariu & Dabija, 2021);
- obtaining a variety of wafers with health benefits. Regular consumption of foods made with chickpea flour can lower the incidence of obesity, type 2 diabetes, certain cancers, and cardiovascular disease. Depurative, detoxifying, antiseptic, antiviral, antibacterial, blood fluidifying, expectorant, and anticancer properties are all present in wild garlic (Dabija, A., 2020). By slowing down gastric emptying, extending intestinal transit time, and slowing down nutrient absorption in the small intestine, spent grain flour has significant effects on digestion (Chetrariu & Dabija, 2021). The immune system, chronic-degenerative inflammatory illnesses, obesity, the prevention of cancer, and the regulation of glucose metabolism may all benefit from the use of golden flaxseed and hemp seeds (Dabija, A., 2020);
- obtaining a variety of wafers that are simple to digest, high in protein and nutritional fiber, and have a low glycemic index; fiber intake improves blood sugar levels and normalizes insulin release.

The implementation of aglutenic and functional wafers in accordance with the invention is next demonstrated using an example. The following components are needed to make 100 kg of aglutenic and functional wafers: to make a fluid dough with a moisture of 65-70%, combine 75 kg of chickpea flour, 25 kg of wild garlic paste, 10 kg of spent grain flour, 5 kilogram of golden flaxseed, 5 kg of hemp seeds, 1 kg of baking soda, 1.5 kg of salt, and water.

Wafers are produced via a procedure that uses the following technological operations: receiving raw components both qualitatively and quantitatively, dosing them in accordance with the manufacturing formula, and then preparing the dough as follows: add 50% of the water used to dissolve the salt and sodium bicarbonate to the mixer, mix for 5 minutes, then add 60% of the chickpea flour and mix for 10 minutes. The remaining chickpea flour, wild garlic paste, spent grain flour, golden flaxseeds, and hemp seeds are then added to the hermetically sealed mixer and blended at a high speed to incorporate a lot of air for an additional 15 minutes. The resulting fluid dough is filtered to remove any clumps and poured into the alveoli of the molds of the electric baking oven. Baking takes place at a temperature of 290°C, for 3...4 minutes, up to the moisture of 2...3%. After baking the wafer sheets are detached from the mold, cooled and packaged.

According to the invention, the product has a higher amount of bioactive substances, dietary fiber, and proteins and is an aglutenic, functional meal. Wafers are made up of 11.64% fiber, 10.02% fats, 21.37% protein, and 49.72% carbohydrates. The product has an energy value per 100 grams of 375 kcal and 1579 kJ, respectively.

The process of obtaining aglutenic and functional wafers, according to the invention, can be reproduced with the same characteristics and performances whenever necessary, which is an argument in order to comply with the criterion of industrial applicability.
1. Banu, C., et al., Explanatory dictionary of science and technology. Food industry, AGIR Publishing House, Bucharest, 2006
2. Zaharia D., The worker's book of flour products industry, Technical Publishing House, Bucharest, 1983
3. Banu, C., et al., Functional foods, food supplements and medicinal plants, ASAB Publishing House, Bucharest, 2010
4. Dabija, A., Unconventional raw materials for the bakery industry, Performantica Publishing House, Iasi, 2020
5. Chetrariu, A. & Dabija, A., Spent Grain from Malt Whisky: Assessment of the Phenolic Compounds, Molecules, 26(11), 3236, 2021

## Claims

1. Aglutenic and functional wafers, **characterized by** the need for the following raw materials to produce 100 kg of the final product: 75 kg of chickpea flour, 25 kg of wild garlic paste, 10 kg of spent grain flour, 5 kg of golden flaxseeds, 5 kg of hemp seeds, 1 kg of baking soda, 1.5 kg of salt, and water to create a fluid dough with a moisture of 65-70%.

2. A process for obtaining aglutenic and functional wafers, carried out in accordance with claim 1, **characterized by** the fact that it consists in the qualitative and quantitative reception of raw and auxiliary materials, dosing of raw and auxiliary materials according to the manufacturing recipe followed by the preparation of the dough by introducing into the mixer 50% of the quantity of water in which the salt and sodium bicarbonate are dissolved, mixing 5 minutes, adding 60% of chickpea flour, mixing 10 minutes, adding 40% chickpea flour, wild garlic paste, spent grain flour, golden flaxseed and hemp seeds, mixing 15 minutes with the hermetically sealed mixer, filter the resulting fluid dough to remove any clumps, pour into the alveoli of the electric oven molds for baking at a temperature of 290°C for 3...4 minutes, up to the moisture of 2...3%, cooling and packaging of the finished product, wafers containing 49.72% carbohydrates, 21.37% protein, 10.02% lipids, and 11.64% fiber with an energy value of 375 kcal/100 g product, 1579 kJ/100 g product, respectively.
